# EUROPÄISCHE PATENTSCHRIFT

(11) **EP 1 964 909 B1**
(45) Veröffentlichungstag und Bekanntmachung des Hinweises auf die Patenterteilung: **11.02.2015**
(21) Anmeldenummer: 08003657.7
(22) Anmeldetag: 28.02.2008
(51) Int. Cl.: C10L 5/46, B09B 3/00, F26B 11/02

(54) **Vorrichtung zur Behandlung von Hausmüll oder hausmüllartigem Abfall zur Herstellung von Brennstoffartikeln**
Device for treating household or similar waste in order to create fuel
Dispositif de traitement de déchets ménagers ou de déchets de type ménagers pour la fabrication d'articles combustibles

(30) Priorität: 28.02.2007 DE 102007010070
(43) Veröffentlichungstag der Anmeldung: 03.09.2008
(73) Patentinhaber: ALBA Group plc & Co. KG, 10719 Berlin (DE)
(72) Erfinder: Lothar Dolle, 44627 Herne (DE)
(74) Vertreter: Grünecker, Kinkeldey, Stockmair & Schwanhäusser

(56) Entgegenhaltungen:
- EP-A- 0 030 376
- EP-A- 0 761 626
- EP-A1- 1 502 667
- WO-A-01/44597
- BE-A2- 902 023
- DE-A1- 4 202 749
- FR-A- 354 763
- GB-A- 2 132 323
- JP-A- 2004 123 307
- JP-A- 2006 275 366
- SU-A1- 1 366 245
- US-A- 1 595 659
- US-A- 4 926 764
- US-A- 5 613 306

## Beschreibung

Die Erfindung bezieht sich auf Techniken zur Behandlung von Hausmüll oder hausmüllartigem Abfall zur Herstellung von Brennstoffartikeln.

### Hintergrund der Erfindung

Es sind in verschiedenen Ausgestaltungen Vorrichtungen und Verfahren zur Behandlung von Hausmüll oder hausmüllartigem Abfall bekannt. Ziel einer Behandlung kann es unter anderem sein, mittels der Müll- oder Abfallbehandelung einen Brennstoffartikel herzustellen. Die grundsätzliche Verfahrensentwicklung hierfür erfolgt in den 70-iger Jahren unter dem Stichwort BRAM (Brennstoff aus Müll). In dieser Zeit wurden mit unterschiedlichen Verfahrenskonzepten Anlagen erprobt und gebaut.

Aufgrund mangelnder Wirtschaftlichkeit im Vergleich zu herkömmlichen Müllverarbeitungsanlagen wie Deponien oder Müllverbrennungsanlagen erfolgte erst Anfang der 90-iger Jahre eine Weiterentwicklung dieser Anlagentechnik. Hier sind insbesondere die sogenannten MBS-Anlagen (MBS - mechanisch-biologische Stabilisierung) zu nennen. Mit Hilfe der mechanisch-biologischen Stabilisierung wird ein sogenanntes Trockenstabilat hergestellt, welches als Brennstoff vermarktet wird.

Bei der Aufbereitung von Hausmüll oder hausmüllartigem Abfall zu Brennstoffen besteht der grundsätzliche Verfahrensablauf in einer vorbereitenden Behandlung, in welcher das zu behandelnde Gut insbesondere zerkleinert und gesiebt wird. Des weiteren werden im Rahmen der Vorbereitung bereits nichtbrennbare (inerte) Materialien aussortiert, beispielsweise Metalle. Im anschließenden Hauptprozess wird das zu behandelnde Gut getrocknet, was in den oben erwähnten MBS-Anlagen mittels einer biologischen Trocknung erfolgt, und weiter gesichtet, beispielsweise mittels Wind- oder Herdsichtung. Anschließend kann das getrocknete und gesichtete Gut zwischengelagert oder gleich zu Pellets oder Ballen verpresst werden, so dass dann der Brennstoff hergestellt ist.

Das Dokument EP 0 030 376 A2 beschreibt ein Verfahren und eine Vorrichtung zum Trocknen und Erhitzen von Kohle. Die Vorrichtung umfasst eine Trocknungseinrichtung und einen Inertgaskreislauf, der durch die Trocknungseinrichtung und in einem Teilbereich über einen Mischer für getrocknete Kohle geführt ist.

Das Dokument EP 1 502 667 A1 beschreibt eine Vorrichtung zur Behandlung von Hausmüll oder hausmüllartigem Abfall zur Herstellung von Brennstoffartikeln, mit:
- einer Trocknereinrichtung, in welcher ein zu behandelndes Gut einem Trocknungsprozess unterzogen wird,
- einer der Trocknereinrichtung vorgelagerten Zuführeinrichtung, über die das zu behandelnde Gut der Trocknereinrichtung zugeführt wird, und
- einer der Trocknereinrichtung nachgelagerten Abführeinrichtung, über welche das zu behandelnde Gut nach dem Trocknungsprozess von der Trocknereinrichtung abgeführt wird, wobei
- die Trocknereinrichtung und die Abführeinrichtung konfiguriert sind, flugfähige Bestandteile des zu behandelnden Gutes mittels eines Gasstromes, welcher zumindest abschnittsweise als ein inertisierter Gasstrom gebildet ist, und nicht flugfähige Schwerstoffbestandteile des zu behandelndes Gutes mittels mechanischer Förderung vorwärts zu transportieren, wobei
- die Trocknereinrichtung mit einer drehbar gelagerten Trocknertrommel gebildet ist, die sich mit der Trocknertrommel drehende, ringförmige Stauscheiben mit hieran angeordneten Schaufelelementen aufweist, mit denen in der Trocknertrommel die flugfähigen Bestandteile aufgewirbelt und die nicht flugfähigen Schwerstoffbestandteile mechanisch transportiert werden und wobei
- die Stauscheiben mit einer Öffnung jeweils versehen sind.

### Zusammenfassung der Erfindung

Aufgabe der Erfindung ist es, eine Vorrichtung zur Behandlung von Hausmüll oder hausmüllartigem Abfall zur Herstellung von Brennstoffartikeln anzugeben, mit der eine verbesserte Prozessführung der Behandlung ausführbar ist. Mit Hilfe der verbesserten Eigenschaften der Vorrichtung soll die Effizienz der Abfall-/Müllbehandlung optimiert werden, insbesondere mittels Verminderung der Ausfallzeiten der Vorrichtung und effizienterer Behandlung des Abfalls, beispielsweise hinsichtlich des Energieaufwandes.

Diese Aufgabe wird erfindungsgemäß durch eine Vorrichtung zur Behandlung von Hausmüll oder hausmüllartigem Abfall zur Herstellung von Brennstoffartikeln nach dem unabhängigen Anspruch 1 gelöst.

Erfindungsgemäß ist eine Vorrichtung zur Behandlung von Hausmüll oder hausmüllartigem Abfall zur Herstellung von Brennstoffartikeln geschaffen, mit einer Trocknereinrichtung, in welcher ein zu behandelndes Gut einem Trocknungsprozess unterzogen wird, einer der Trocknereinrichtung vorgelagerten Zuführeinrichtung, über die das zu behandelnde Gut der Trocknereinrichtung zugeführt wird, und einer der Trocknereinrichtung nachgelagerten Abführeinrichtung, über welche das zu behandelnde Gut nach dem Trocknungsprozess von der Trocknereinrichtung abgeführt wird, wobei die Trocknereinrichtung und die Abführeinrichtung konfiguriert sind, flugfähige Bestandteile des zu behandelnden Gutes mittels eines Gasstromes, welcher zumindest abschnittsweise als ein inertisierter Gasstrom gebildet ist, und nicht flugfähige Schwerstoffbestandteile des zu behandelnden Gutes mittels mechanischer Förderung vorwärts zu transportieren, wobei Innenwandungsabschnitte entlang eines Strömungsweges des Gasstroms mit einer Verschleißschutzauskleidung versehen sind, wobei die Trocknereinrichtung mit einer drehbar gelagerten Trocknertrommel gebildet ist, die sich mit der Trocknertrommel drehende Stauscheiben mit hieran angeordneten Schaufelelementen aufweist, mit denen in der Trocknertrommel die flugfähigen Bestandteile aufgewirbelt und die nicht flugfähigen Schwerstoffbestandteile mechanisch transportiert werden und wobei die Stauscheiben mit Öffnungen am äußeren Rand und zusätzlichen Mitnehmern versehen sind.

Ein wesentlicher Vorteil, welcher mit der Erfindung gegenüber dem Stand der Technik erreicht ist, besteht darin, dass Ausfallzeiten der Behandlungsvorrichtung oder -anlage vermindert werden, indem die Verschleißanfälligkeit gemindert ist. Auf diese Weise wird die Effizienz des Betriebes der Müll-/Abfallbehandlungsanlage insgesamt erhöht. Mit Hilfe der Verschleißschutzauskleidung wird vermieden, dass die von dem Gasstrom transportierten, flugfähigen Bestandteile des zu behandelnden Gutes Wandungsabschnitte von Gehäuseteilen beschädigen, die entlang ihres Transportweges gebildet sind. Da die flugfähigen Bestandteile aufgrund ihres Transportes mit dem Gasstrom, bei dem es sich wahlweise um einen erhitzen Luftstrom handelt, beschleunigt werden, können sie beim Auftreffen auf die Innenwand der Gehäuseteile, die üblicherweise aus einem Stahl sind und entlang welcher der Gasstrom verläuft, zur Beschädigung führen, insbesondere nach längerem Betrieb der Hausmüll- / Abfallbehandlungsvorrichtung. Mit Hilfe der Verschleißschutzauskleidung wird eine solche Beschädigung minimiert oder sogar vollständig unterbunden.

Eine bevorzugte Weiterbildung der Erfindung sieht vor, dass eine dem Gasstrom zugewandte Oberfläche der Verschleißschutzauskleidung aus einem Material mit einer gegenüber Stahl größeren Materialhärte ist, wahlweise mit einer Mohshärte von mehr als etwa 8. Vom Hausmüll umfasste, flugfähige Bestandteile können bei ausreichend kleiner Größe auch Glaspartikel oder Steine sein. Diese Materialien weisen eine Mohshärte von etwa 7 bis 8 auf. Um den Verschleiß durch solche Partikel in dem Gasstrom zu minimieren, ist es deshalb bevorzugt, dass die Verschleißschutzauskleidung eine Mohshärte von mehr als etwa 8 aufweist. Für Stahl beträgt die Mohshärte im Unterschied dazu nur etwa 6 bis 8.

Bei einer zweckmäßigen Ausgestaltung der Erfindung kann vorgesehen sein, dass die Verschleißschutzauskleidung eine keramische Auskleidung ist, bei der zumindest die dem Gasstrom zugewandte Oberfläche der Versehleißschutzauskleidung aus einem keramischen Material ist. Auskleidungselemente mit einer keramischen Oberfläche sind in verschiedenen Ausgestaltungen verfügbar und können so genutzt werden, um unterschiedliche Oberflächengestaltungen in der Anlage zu verkleiden.

Eine vorteilhafte Ausführungsform der Erfindung sicht vor, dass die Verschleißschutzauskleidung mit Hilfe von Auskleidungskacheln gebildet ist, die zum Beispiel aufgeklebt werden. Kacheln stehen in verschiedenen Größen zur Verfügung, um unterschiedliche Oberflächenformen anzupassen.

Bevorzugt sieht eine Fortbildung der Erfindung vor, dass die Verschleißschutzauskleidung zumindest auf Innenwandungsabschnitten gebildet ist, auf die der Gasstrom zuströmt.

Bei einer vorteilhaften Ausgestaltung der Erfindung kann vorgesehen sein, dass die Verschleißschutzauskleidung Auskleidungsabschnitte in einem in der Abführeinrichtung der Trocknereinrichtung nachgelagerten Ausfallgehäuse umfasst. Bei einem üblichen Betrieb der Abfall / Müllbehandlungsanlage werden die flugfähigen Bestandteile mittels des Gasstroms mit einer Geschwindigkeit von etwa 30 m/s aus der Trocknereinrichtung in das nachgelagerte Ausfallgehäuse geschleudert. Die Verschleißschutzauskleidung dient gerade in dem Ausfallgehäuse dann dazu, dessen Beschädigung zu vermeiden und so auch einen Langzeitbetrieb der Anlage zu ermöglichen. Darüber hinaus kann die Verschleißschutzauskleidung in dem Ausfallgehäuse in einer zweckmäßigen Ausgestaltung weiter dafür genutzt werden, Wandungsabschnitte zu verkleiden, auf denen die nicht flugfähigen Schwerstoffbestandteile zum Austrag mechanisch transportiert werden, beispielsweise über die Oberfläche rutschend, gegen Verschleiß zu schützen.

Eine Weiterbildung der Erfindung kann vorsehen, dass die Verschleißschutzauskleidung andere Auskleidungsabschnitte in einem oder mehreren Zyklonenabscheidern umfasst, die in der Abführeinrichtung der Trocknereinrichtung nachgelagert sind. Die Zyklonenabscheider dienen dazu, die mittels des Gasstroms aus der Trocknereinrichtung transportierten, flugfähigen Bestandteile aus dem Gasstrom für die Weiterbehandlung abzuscheiden. In einer Ausgestaltung ist vorgesehen, die nach der Abscheidung in den Zyklonenabscheidern verbleibende Luft wenigstens teilweise wieder in den Gasstrom einzubringen, welcher als Transport- und Trocknungsmedium in der Trocknereinrichtung verwendet wird, wodurch eine teilweise Kreislaufführung realisiert ist. Nicht wiederverwendete Anteile der Luft aus den Zyklonenabscheidern werden über geeignete Filter nach außen abgegeben, zum Beispiel unter Verwendung wenigstens eines RTO-Filters (RTO - regenerierbare thermische Oxidation).

Eine bevorzugte Weiterbildung der Erfindung sieht vor, dass in einem Zuführkanal, über welchen der Gasstrom mit den flugfähigen Bestandteilen den mehreren Zyklonenabscheidern zugeführt wird, eine oder mehrere bewegbare Steuerelemente gebildet sind, mit denen eine Verteilung des Gasstromes auf die mehreren Zyklonenabscheider einstellbar ist. Ein effizienter Durchsatz der Abfall- / Müllbehandlungsvorrichtung wird insbesondere dann erreicht, wenn der die flugfähigen Bestandteile des zu behandelnden Gutes transportierende Gasstrom auf die mehreren Zyklonenabscheider im wesentlichen gleichmäßig verteilt wird.

Bei einer zweckmäßigen Ausgestaltung der Erfindung kann vorgesehen sein, dass an dem einen oder den mehreren Zyklonenabscheidern jeweils eine einen Differenzdruck zwischen einem oberen und einem unteren Bereich erfassende Differenzdruck-Messeinrichtung gebildet ist. Ein ordnungsgemäßer Betrieb der Zyklonenabscheider kann mit Hilfe einer zugeordneten Differenzdruck-Messeinrichtung überwacht werden. Darüber hinaus kann die Differenzdruck-Messeinrichtung in Verbindung mit den Steuerelementen genutzt werden, um die hierdurch regelbare Verteilung des Gasstromes auf die mehreren Zyklonenabscheider einzustellen und anschließend zu überwachen.

Eine vorteilhafte Ausführungsform der Erfindung sieht eine Gasstromerzeugungseinrichtung mit einer Heizeinrichtung zum Erhitzen des Gasstroms und einer Inertisierungseinrichtung vor, die konfiguriert ist, über eine Eindüsungseinrichtung den Sauerstoffgehalt des Gasstroms vermindernd Wasserdampf in den Gasstrom einzubringen. Bevorzugt wird der Wasserdampf mit Hilfe von Düsen erzeugt, die mit einem Wasserdruck von wenigstens etwa 45 bar beaufschlagt werden. Mittels Einbringen des Wasserdampfes in den erhitzten Gasstrom wird der relative Sauerstoffgehalt des Gasstroms vermindert, wodurch eine Brandgefahr in der Trocknereinrichtung reduziert ist, was auch als Inertisierung bezeichnet wird. Als die Trocknereinrichtung durchströmender Gasstrom ergibt sich dann ein Luftstrom mit gesättigtem Wasserdampf. Der relative Sauerstoffgehalt des Luftstroms wird mit Hilfe der Inertisierung auf etwa 9 bis 11% vermindert. Eine weitere Reduzierung des Sauerstoffgehaltes erfolgt dann mittels Zuführen des zu behandelnden Hausmülls oder hausmüllartigem Abfalls aufgrund der hierin enthaltenen Wasseranteile. Es ergibt sich dann schließlich ein Sauerstoffgehalt von etwa 5 bis 7 %.

Bevorzugt sieht eine Fortbildung der Erfindung vor, dass der Eindüsungseinrichtung eine Wasserbehandlungseinrichtung vorgeschaltet ist, mit der zur Wasserdampfbildung zu verdüsendes Wasser entkalkt werden kann.

Bei einer vorteilhaften Ausgestaltung der Erfindung kann vorgesehen sein, dass die Trocknereinrichtung mit einer drehbar gelagerten Trocknertrommel gebildet ist, die sich mit der Trocknertrommel drehende Stauscheiben mit hieran angeordneten Schaufelelementen aufweist, mit denen in der Trocknertrommel die flugfähigen Bestandteile aufgewirbelt und die nicht flugfähigen Schwerstoffbestandteile mechanisch transportiert werden.

Eine Weiterbildung der Erfindung kann vorsehen, dass die Trocknereinrichtung und die Abführeinrichtung zumindest abschnittsweise eine thermische Isolierung aufweisen. Die thermische Isolierung, die vorzugsweise als Außenisolierung ausgeführt ist, kann sich über den gesamten Bereich der Trocknereinrichtung und die nachgelagerte Abführeinrichtung erstrecken, welche beispielsweise aus dem Ausfallgehäuse und den Zyklonenabscheidern besteht. Mit Hilfe der thermischen Isolierung wird verhindert, dass die Temperatur in der nachgelagerten Abführeinrichtung so absinkt, dass der Wasserdampf im Gasstrom kondensiert. Ein derartiges Kondensat kann zur ungewünschte Korrosion in den Bauteilen der Anlage führen.

In einem Ausführungsbeispiel erfolgt die Erweiterung des Durchmessers des Aufgabetrichters konkret zum Trichterboden und zu einer dort angeordneten Speiseschnecke hin. Mit Hilfe einer solchen konstruktive Gestaltung, die auch als negative Steigung der Trichterseitenwände bezeichnet werden kann, wird verhindert, dass sich über den das zu behandelnde Gut verdichtenden und transportierenden Schnecken im Öffnungsbereich des Aufgabetrichters Brücken bilden. Die Bodenfläche des Aufgabetrichters ist erweitert. Von dem Aufgabetrichter gelangt das zu behandelnde Gut in einer Vorrichtungsausgestaltung zu einer Speiseschnecke, die es dann der Trocknereinrichtung zuführt, nämlich der Trocknertrommel.

Mit Hilfe der in ihren verschiedenen Ausgestaltungen vorangehend erläuterten Vorrichtung ist ein Verfahren zur Behandlung von Hausmüll oder hausmüllartigem Abfall zur Herstellung von Brennstoffartikeln ausführbar, welches die folgenden Schritte umfasst:
- Vorbehandeln eines zu behandelnden Gutes,
- Einbringen des vorbehandelten Gutes in einer Trocknereinrichtung,
- Trocknen des vorbehandelten Gutes mittels eines erhitzten und inertisieren Gasstroms in einer Trocknertrommel, wobei in der Trocknertrommel flugfähigen Bestandteile des vorbehandelten Gutes mittels des Gasstroms und nicht flugfähige Bestandteile des vorbehandelten Gutes mittels mechanische Förderelemeiite transportiert werden,
- Nachbehandeln des getrockneten Gutes und
- Herstellen von Brennstoffartikeln aus dem nachbehandelten Gut.

Im Rahmen der Nachbehandlung des getrockneten Gutes werden die flugfähigen Bestandteile aus dem Gasstrom bevorzugt mittels Zyklonenabscheidern abgeschieden, um sie dann wahlweise weiter zu sichten. Der mittels Wasserdampfeindüsung inertisierte Gasstrom ist vorzugsweise ein erhitzter Luftstrom. Das Verfahren kann mittels Nutzung der vorangehend erläuterten, unterschiedlichen Vorriehtungsclcmenten anwendungsbezogen verschiedenen Ausgestaltungen entsprechend fortgebildet werden.

### Beschreibung bevorzugter Ausführungsformen der Erfindung

Die Erfindung wird im folgenden anhand von bevorzugten Ausführungsformen unter Bezugnahme auf Figuren einer Zeichnung näher erläutert. Hierbei zeigen:
- Fig. 1: eine schematische Blockdarstellung einer Vorrichtung zur Behandlung von Hausmüll oder hausmüllartigem Abfall,
- Fig. 2: eine perspektivische Darstellung eines Aufgabetrichters,
- Fig. 3: eine Trocknertrommel,
- Fig. 4: ein an die Trocknertrommel endseitig angeschlossenes Ausfallgehäuse,
- Fig. 5: eine Seitenansicht des Trocknergehäuses aus Fig. 4,
- Fig. 6: eine Anordnung von drei Zyklonenabscheidern,
- Fig. 7: die Anordnung von drei Zyklonenabscheidern in Fig. 6 von oben und
- Fig. 8A bis C: Stauscheiben aus der Trocknertrommel in Fig. 3.

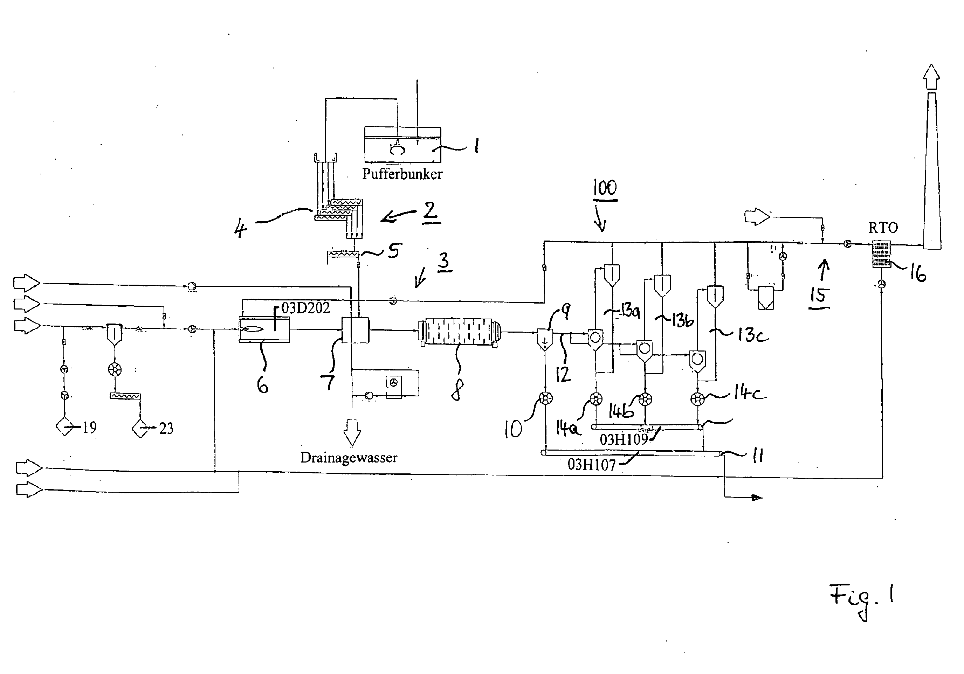

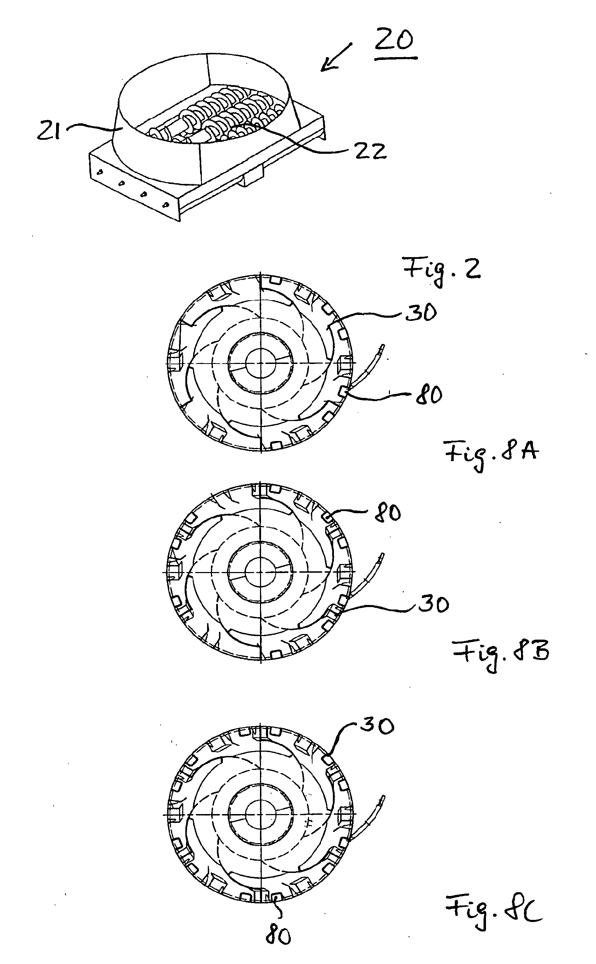

Fig. 1 zeigt eine schematische Darstellung einer Vorrichtung zur Behandlung von Hausmüll oder hausmüllartigem Abfall. Das zu behandelnde Gut in Form von Hausmüll oder hausmüllartigem Abfall wird nach seiner Anlieferung und Vorbearbeitung in einem Pufferbunker 1 zwischengelagert. Insbesondere sind metallische Bestandteile aussortiert. Aber auch andere inerte Bestandteile sind an dieser Stelle bereits im Rahmen einer Vorsortierung aus dem zu behandelnden Gut entfernt. Insgesamt erfolgt eine Rohmüllaufbereitung, bei der das zu behandelnde Gut auch zerkleinert wird. Darüber hinaus werden hierbei Kunststoffbestandteile aussortiert, da diese dem folgenden Trocknungsprozess nicht unterzogen werden müssen. Diese Kunststoffbestandteile werden aussortiert und später dem getrockneten Gut wieder zugeführt, bevor der Brennstoffartikel hergestellt wird. In dem Pufferbunker 1 liegt der Müll / Abfall nach vorheriger Sichtung mit im wesentlichen einheitlicher Korngröße vor. Aus dem Pufferbunker 1 wird das zu behandelnde Gut über eine Zuführeinrichtung 2 auf eine Trocknereinrichtung 3 gegeben. Die Zuführeinrichtung 2 umfasst eine Aufgabeeinrichtung 4, die in der dargestellten Ausführung ihrerseits mehrere Schnecken aufweist. Teil der Aufgabevorrichtung 4 ist weiterhin ein Aufgabetrichter, der unten unter Bezugnahme auf Fig. 2 näher erläutert wird. In dem Aufgabetrichter wird das zu behandelnde Gut verdichtet. Über eine Transporteinrichtung 5 gelangt das zu behandelnde Gut dann zur Trocknereinrichtung 3.

In der Trocknereinrichtung 3 wird in einem Brenner 6 ein Luftstrom erhitzt. In den erhitzten Luftstrom wird in einer nachgeschalteten Inertisierungseinrichtung 7 Wasserdampf eingedüst. Diese Eindüsung erfolgt über Wasserdüsen, die mit einem Wasserdruck von vorzugsweise etwa 45 bar beaufschlagt werden. Als Wasserdüsen werden Zerstäubungsdüsen verwendet. Den Wasserdüsen vorgeschaltet ist eine Wasseraufbereitungseinrichtung, mit der eine Verkalkung sowie andere Ablagerungen vermieden werden, wodurch eine dauerhafte Betriebsbereitschaft der Inertisierungseinrichtung 7 gewährleistet wird. Mit Hilfe des Eindüsens von Wasserdampf wird der Sauerstoffgehalt der erhitzten Luft, die ihrerseits dann den Gasstrom zum Transport von flugfähigen Bestandteilen des zu trocknenden Gutes bildet, auf einen Wert von etwa 9 bis 11 % begrenzt.

Der erhitzte und inertisierte Gasstrom wird anschließend einer Trocknertrommel 8 zugeführt, auf die auch das zu behandelnde Gut gegeben wird. Die Trocknertrommel 8 ist drehbar gelagert und wird im Betrieb mit einer Drehgeschwindigkeit von etwa drei bis fünf Umdrehungen pro Minute gedreht. In der Trocknertrommel 8 wird das zu behandelnde Gut getrocknet. Zum Transport des eingebrachten Gutes dienen einerseits der erhitzte Gasstrom, mit dem flugfähige Bestandteile transportiert werden, und andererseits mechanische Bauteile in der Trocknertrommel 8 wie Stauscheiben (vgl. Erläuterungen unten), mit denen die nicht flugfähige Schwerstofffraktion des zu behandelnden Gutes in der Trocknertrommel 8 mechanisch gefördert wird.

Der Trocknertrommel 8 nachgelagert ist ein Ausfallgehäuse 9, in welches sowohl der die flugfähigen Bestandteile transportierende Gasstrom als auch die mechanisch geförderten, nicht flugfähigen Schwerstoffbestandteile gelangen. Über eine dem Abfallgehäuse 9 zugeordnete Zellenradschleuse 10 gelangen die nicht flugfähigen Schwerstoffbestandteile zu einer Fördereinrichtung 11, mit der sie zur Weiterverarbeitung transportiert werden. Bestandteil der Weiterverarbeitung sind insbesondere eine weitere Sortierung des Gutes, beispielsweise mittels Sieben, einer Videosichtung und / oder einer Röntgenstrahlsichtung. Nach Durchlaufen der weiteren Sichtungsstufen wird das behandelte Gut schließlich zu einem Brennstoffartikel verpresst, so dass beispielsweise Pellets entstehen.

In einer der Trocknereinrichtung 3 nachgelagerten Abführeinrichtung 100 wird das getrocknete Gut nachbehandelt. Zur Abführeinrichtung 100 zählen in der dargestellten Ausführung insbesondere das die flugfähigen Bestandteile und die Schwerstofffraktion "empfangende" Ausfallgehäuse 9 und drei Zyklonenabscheidern 13a, 13b, 13c, zu denen der Luftstrom mit den flugfähigen Bestandteilen aus dem Ausfallgehäuse 9 über einen Zuführkanal 12 gelangt. In den Zyklonenabscheidern 13a, 13b, 13c werden die flugfähigen Bestandteile aus dem Gasstrom abgeschieden, ebenfalls über zugeordnete Zahnradschleusen 14a, 14b, 14c. Die in den Zyklonenabscheidern 13a, 13b, 13c verbleibende Abluft wird teilweise über eine Filter- und Ablufteinrichtung 15 abgeführt. Bestandteil der Filter- und Ablufteinrichtung 15 ist bei der dargestellten Ausführungsform ein RTO-Filter 16 (RTO - regenerierbare thermische Oxidation). Der übrige Teil der Abluft aus den Zyklonenabscheidern 13a, 13b, 13c wird zurück in die Brennkammer 6 geführt.

Um die Verschleißbeständigkeit der Anlage zu verbessern, was zur effizienteren Nutzung der Anlage führt, ist vorgesehen, das Ausfallgehäuse 9 sowie die Zyklonenabscheider 13a, 13b, 13c innen zumindest in Teilbereichen mit Verschleißschutzauskleidungen zu versehen, bei denen sich bevorzugt um Auskleidungskacheln mit einer keramischen Oberfläche handelt.

Um einen Abfall der Temperatur des die Trocknertrommel 8 verlassenden Gasstroms unterhalb einer Kondensationstemperatur zu vermeiden, ist die Anlage im Bereich hinter der Trocknertrommel 8, also umfassend das Ausfallgehäuse 9, den Zuführkanal 12 sowie die Zyklonenabscheider 13a, 13b, 13c zumindest abschnittsweise thermisch isoliert. Auf diese Weise wird eine Kondensation des Wassers in dem transportierenden Luftstrom unterbunden, was sonst zu Korrosionsproblemen führen kann.

Fig. 2 zeigt eine perspektivische Darstellung eines Aufgabetrichters 20, welcher Bestandteil der Aufgabeeinrichtung 4 in Fig. 1 ist. Gemäß der Darstellung in Fig. 2 weisen Seitenwände 21 des Aufgabetrichters 20 eine negative Steigung auf, so dass sich der Querschnitt der Öffnung des Aufgabetrichters 20 nach unten erweitert. Hierdurch wird verhindert, dass sich im Öffnungsbereich des Aufgabetrichters 20 beim Einbringen des zu behandelnden Gutes Brücken bilden, die die Öffnung des Aufgabetrichters verschließen. Schnecken 22 dienen dazu, dass aufgegebene Gut zu fordern und zu dosieren.

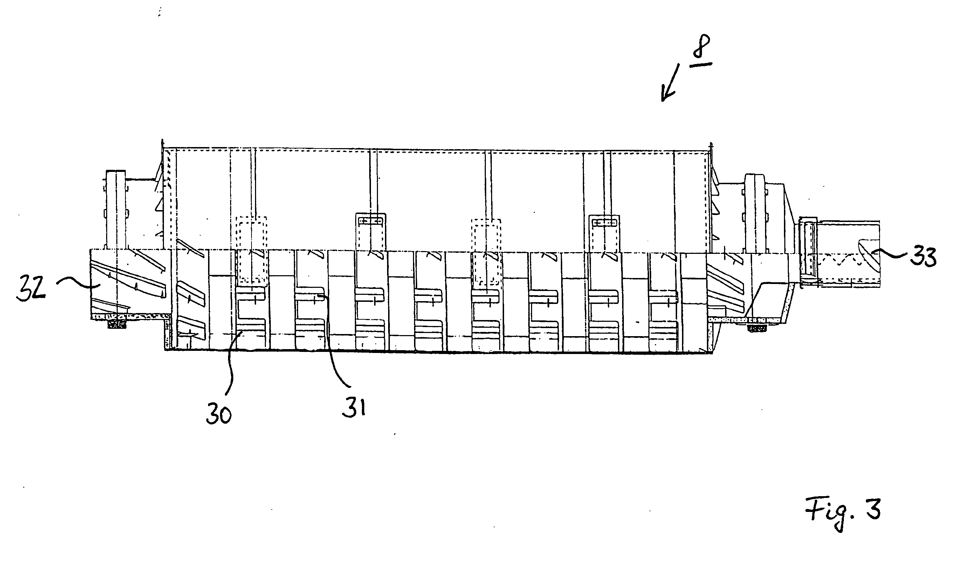

Fig. 3 zeigt eine vergrößerte Darstellung der Trocknertrommel 8. In der Trocknertrommel sind hintereinander angeordnet mehrere Stauscheiben 30, die jeweils mit Schaufeln 31 versehen sind. Über einen Trocknertrommeleingang 32 gelangt das zu trocknende Gut in die Trocknertrommel 8. Beim Drehen der Trocknertrommel 8 drehen sich die Stauscheiben 30 ebenfalls. Mit Hilfe der Schaufeln 31 wird das eingebrachte Gut umgewälzt, so dass flugfähige Bestandteile von dem ebenfalls über den Trocknertrommeleingang 32 eingebrachten Luftstrom zum Trocknertrommelausgang 33 gefördert werden. Die nicht flugfähigen Bestandteile der Schwerstofffraktion werden mit Hilfe der Stauscheiben 30 und der hieran angeordneten Schaufeln 31 mechanisch gefördert. Über ein Ausgangsstutzen 34 gelangt das getrocknete Gut dann in das Ausfallgehäuse 9 (vgl. Fig. 1).

Gemäß Fig. 8A bis 8C sind die Stauscheiben 30 mit Öffnungen 80 am äußeren Rand und zusätzlichen Mitnehmern optimiert, so dass ein schnellerer Materialtransport der Schwerstoffe zum Trocknertrommelausgang 33 erfolgt. Die ersten sechs Stauscheiben sind mit sechs Öffnungen oder Durchdringungen versehen (vgl. Fig. 8A). Die siebte Stauscheibe weist neun Öffnungen 80 auf (vgl. Fig. 8B), und die achte Stauscheibe verfügt über zwölf Öffnungen 80 (vgl. Fig. 8C).

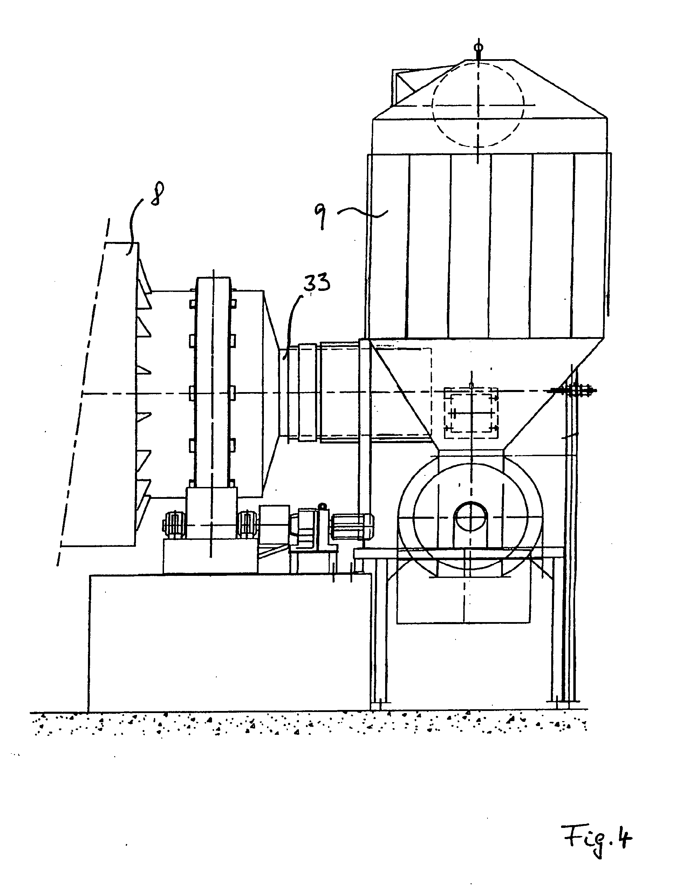

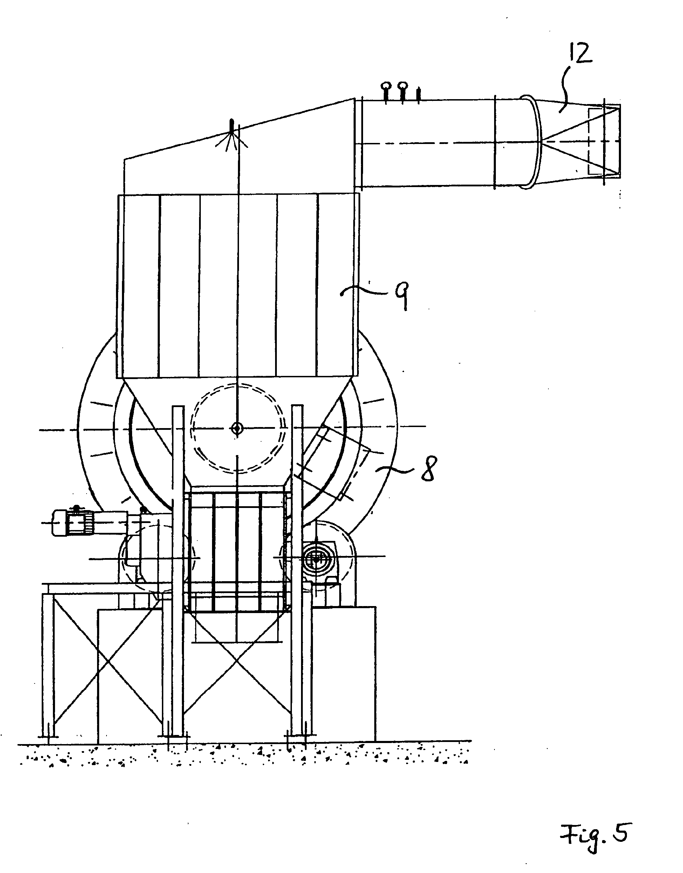

Fig. 4 zeigt eine vergrößerte Darstellung des Bereiches des Trocknertrommelausgangs 33 mit dem hieran angeschlossenen Ausfallgehäuse 9 von der Seite. Fig. 5 zeigt dann die Anordnung aus Fig. 4 von vom. Gemäß Fig. 5 schließt sich an das Ausgangsgehäuse 9 oben der Zuführkanal 12 an, über welchen der Luftstrom mit den flugfähigen Bestandteilen dann zu den drei Zyklonenabscheidern 13a, 13b, 13c (vgl. Fig. 1) geführt wird.

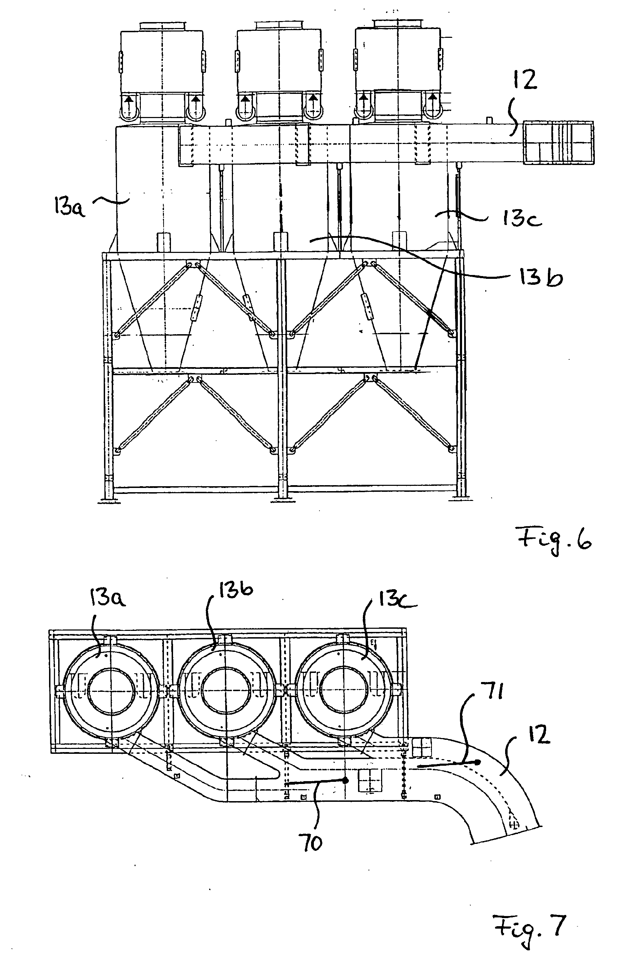

Fig. 6 und 7 zeigen eine vergrößerte Darstellung einer Anordnung mit drei Zyklonenabscheidern 13a, 13b, 13c in Vorder- und Draufsicht. Gemäß Fig. 7 sind in dem Zuführkanal 12 zwei schwenkbare Klappen 70, 71 angeordnet, mit denen die Verteilung des ankommenden Luftstroms mit den flugfähigen Bestandteilen auf die drei Zyklonenabscheider 13a, 13b, 13c eingestellt werden kann.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zur Behandlung von Hausmoll oder hausmültartigem Abfall zur Herstellung von Brennstoffartikeln, mit:
- einer Trocknereinrichtung (3), in welcher ein zu behandelndes Gut einem Trocknungsprozess unterzogen wird,
- einer der Trocknereinrichtung (3) vorgelagerten Zuführeinrichtung (2), über die das zu behandelnde Gut der Trocknereinrichtung (3) zugeführt wird, und
- einer der Trocknereinrichtung (3) nachgelagerten Abführeinrichtung (100), über welche das zu behandelnde Gut nach dem Trocknungsprozess von der Trocknereinrichtung (3) abgeführt wird, wobei
- die Trocknereinrichtung (3) und die Abführeinrichtung (100) konfiguriert sind, flugfähige Bestandteile des zu behandelnden Gutes mittels eines Gasstromes, welcher zumindest abschnittsweise als ein inertisierter Gasstrom gebildet ist, und nicht flugfähige Schwerstoffbestandteile des zu behandelndes Gutes mittels mechanischer Förderung vorwärts zu transportieren, wobei
- Innenwandungsabschnitte entlang eines Strömungsweges des Gasstroms mit einer Verschleißschutzauskleidung versehen sind, wobei
- die Trocknereinrichtung (3) mit einer drehbar gelagerten Trocknertrommel (8) gebildet ist, die sich mit der Trocknertrommel (8) drehende Stauscheiben (30) mit hieran angeordneten Schaufelelementen (31) aufweist, mit denen in der Trocknertrommel (8) die flugfähigen Bestandteile aufgewirbelt und die nicht flugfähigen Schwerstoffbestandteile mechanisch transportiert werden und wobei
- die Stauscheiben (30) mit Öffnungen (80) am äußeren Rand und zusätzlichen Mitnehmern versehen sind.

2. Vorrichtung nach Anspruch 1, **dadurch gekennzeichnet, dass** eine dem Gasstrom zugewandte Oberfläche der Verschleißschutzauskleidung aus einem Material mit einer gegenüber Stahl größeren Materialhärte ist, wahlweise mit einer Mohshärte von mehr als 8.

3. Vorrichtung nach Anspruch 1 oder 2, **dadurch gekennzeichnet, dass** die Verschleißschutzauskleidung eine keramische Auskleidung ist, bei der zumindest die dem Gasstrom zugewandte Oberfläche der Verschleißschutzauskleidung aus einem keramischen Material ist.

4. Vorrichtung nach einem der vorangehenden Ansprüche, **dadurch gekennzeichnet, dass** die Verschleißschutzauskleidung mit Hilfe von Auskleidungskacheln gebildet ist.

5. Vorrichtung nach einem der vorangehenden Ansprüche, **dadurch gekennzeichnet, dass** die Verschleißschutzauskleidung zumindest auf Innenwandungsabschnitten gebildet ist, auf die der Gasstrom zuströmt.

6. Vorrichtung nach einem der vorangehenden Ansprüche, **dadurch gekennzeichnet, dass** die Verschleißschutzauskleidung Auskleidungsabschnitte in einem in der Abführeinrichtung (100) der Trocknereinrichtung (3) nachgelagerten Ausfallgehäuse (9) umfasst.

7. Vorrichtung nach einem der vorangehenden Ansprüche, **dadurch gekennzeichnet, dass** die Verschleißschutzauskleidung andere Auskleidungsabschnitte in einem oder mehreren Zyklonenabscheidern (13a, 13b, 13c) umfasst, die in der Abführrichtung (100) der Trocknereinrichtung (3) nachgelagert sind.

8. Vorrichtung nach Anspruch 7, **dadurch gekennzeichnet, dass** in einem Zuführkanal (12) über welchen der Gasstrom mit den flugfähigen Bestandteilen den mehreren Zyklonenabscheidern (13a, 13b, 13c) zugeführt wird, eine oder mehrere bewegbare Steuerelemente (70, 71) gebildet sind, mit denen eine Verteilung des Gasstromes auf die mehreren Zyklonenabscheider (13a, 13b, 13c) einstellbar ist.

9. Vorrichtung nach Anspruch 7 oder 8, **dadurch gekennzeichnet, dass** an dem einen oder den mehreren Zyklonenabscheidern (13a, 13b, 13c) jeweils eine einen Differenzdruck zwischen einem oberen und einem unteren Bereich erfassende Differenzdruck-Messeinrichtung gebildet ist.

10. Vorrichtung nach einem der vorangehenden Ansprüche, **gekennzeichnet durch** eine Gasstromerzeugungseinrichtung (6) mit einer Heizeinrichtung zum Erhitzen des Gasstroms und einer Inertisierungseinrichtung (7), die konfiguriert ist, über eine Eindüsungseinrichtung den Sauerstoffgehalt des Gasstroms vermindernd Wasserdampf in den Gasstrom einzubringen.

11. Vorrichtung nach Anspruch 10, **dadurch gekennzeichnet, dass** der Eindüsungseinrichtung eine Wasserbehandlungseinrichtung vorgeschaltet ist, mit der zur Wasserdampfbildung zu verdüsendes Wasser entkalkt werden kann.

12. Vorrichtung nach einem der vorangehenden Ansprüche, **dadurch gekennzeichnet, dass** die Trocknereinrichtung (3) und die Abführeinrichtung (100) zumindest abschnittsweise eine thermische Isolierung aufweisen.

## Claims

1. Apparatus for treating household or similar waste in order to create fuel, comprising:
- a dryer device (3), in which material to be treated is subjected to a drying process,
- a feed device (2), arranged upstream of the dryer device (3), via which the material to be treated is fed to the dryer device (3), and
- a discharge device (100), arranged downstream of the dryer device (3), via which the material to be treated is discharged from the dryer device (3) after the drying process, wherein
- the dryer device (3) and the discharge device (100) are configured such that airborne constituents of the material to be treated are transported forward by means of a gas stream which is formed at least in some sections as a gas stream that has been made inert, and non-airborne heavy constituents of the material to be treated are transported forward by means of mechanical conveying, wherein
- inner wall sections along a flow path of the gas stream are provided with an anti-wear lining, wherein
- the dryer device (3) is formed with a rotatably mounted dryer drum (8) which has baffle plates (30) that rotate with the dryer drum (8) and have vane elements (31) arranged thereon, by virtue of which the airborne constituents are dispersed in the dryer drum (8) and the non-airborne heavy constituents are mechanically transported, and wherein
- the baffle plates (30) are provided with openings (80) at the outer edge and with additional carriers.

2. Apparatus according to claim 1, **characterized in that** a surface of the anti-wear lining that faces towards the gas stream is made of a material having a material hardness greater than that of steel, optionally having a Mohs hardness of more than 8.

3. Apparatus according to claim 1 or 2, **characterized in that** the anti-wear lining is a ceramic lining, on which at least the surface of the anti-wear lining that faces towards the gas stream is made of a ceramic material.

4. Apparatus according to any of the preceding claims, **characterized in that** the anti-wear lining is formed by means of lining tiles.

5. Apparatus according to any of the preceding claims, **characterized in that** the anti-wear lining is formed at least on inner wall sections towards which the gas stream flows.

6. Apparatus according to any of the preceding claims, **characterized in that** the anti-wear lining comprises lining sections in a drop box (9) arranged downstream of the dryer device (3) in the discharge device (100).

7. Apparatus according to any of the preceding claims, **characterized in that** the anti-wear lining comprises other lining sections in one or more cyclone separators (13a, 13b, 13c) which are arranged downstream of the dryer device (3) in the discharge device (100).

8. Apparatus according to claim 7, **characterized in that** one or more movable control elements (70, 71) are formed in a feed channel (12) via which the gas stream containing the airborne constituents is fed to the plurality of cyclone separators (13a, 13b, 13c), by means of which control elements a distribution of the gas stream among the plurality of cyclone separators (13a, 13b, 13c) can be varied.

9. Apparatus according to claim 7 or 8, **characterized in that** in each case a differential pressure measuring device, which detects a differential pressure between an upper and a lower region, is formed on the one or more cyclone separators (13a, 13b, 13c).

10. Apparatus according to any of the preceding claims, **characterized by** a gas stream generating device (6) comprising a heating device for heating the gas stream and an inerting device (7) which is configured to introduce water vapour into the gas stream via an injection device so as to reduce the oxygen content of the gas stream.

11. Apparatus according to claim 10, **characterized in that** there is arranged upstream of the injection device a water treatment device by which water that is to be injected in order to form water vapour can be decalcified.

12. Apparatus according to any of the preceding claims, **characterized in that** the dryer device (3) and the discharge device (100) have thermal insulation at least in some sections.

## Revendications

1. Installation pour le traitement d'ordures ménagères ou de déchets similaires aux ordures ménagères, en vue de la fabrication d'articles de combustible, comprenant
- un dispositif de séchage (3) dans lequel du produit à traiter est soumis à un processus de séchage,
- un dispositif d'alimentation (2) placé en amont du dispositif de séchage (3) et par l'intermédiaire duquel le produit à traiter est amené au dispositif de séchage (3), et
- un dispositif d'évacuation (100) placé en aval du dispositif de séchage (3) et par l'intermédiaire duquel le produit à traiter est évacué du dispositif de séchage (3), après le processus de séchage,
installation
- dans laquelle le dispositif de séchage (3) et le dispositif d'évacuation (100) sont configurés pour transporter en avant des constituants du produit à traiter susceptibles d'être en suspension dans l'air, au moyen d'un flux de gaz formé au moins partiellement sous la forme d'un flux de gaz d'inertisation, et des constituants de substances lourdes du produit à traiter, non susceptibles d'être en suspension dans l'air, au moyen d'un transport mécanique,
- dans laquelle des secteurs de paroi intérieure le long du parcours d'écoulement du flux de gaz, sont pourvus d'une garniture de protection contre l'usure,
- dans laquelle le dispositif de séchage (3) est réalisé à l'aide d'un tambour de séchage (8) monté en rotation, qui présente des disques de retenue (30) tournant avec le tambour de séchage (8) et sur lesquels sont agencés des éléments d'aube (31), à l'aide desquels, dans le tambour de séchage (8), est produit un tourbillonnement des constituants susceptibles d'être en suspension dans l'air, et un transport mécanique des constituants de substances lourdes non susceptibles d'être en suspension dans l'air, et
- dans laquelle les disques de retenue (30) sont pourvus d'ouvertures (80) au niveau du bord extérieur, et d'entraîneurs supplémentaires.

2. Installation selon la revendication 1, **caractérisée en ce qu'**une surface de la garniture de protection contre l'usure, dirigée vers le flux de gaz, est en un matériau d'une dureté de matériau plus élevée que l'acier, au choix d'une dureté Mohs de plus de 8.

3. Installation selon la revendication 1 ou la revendication 2, **caractérisée en ce que** la garniture de protection contre l'usure est une garniture céramique, dans laquelle au moins la surface de la garniture de protection contre l'usure, qui est dirigée vers le flux de gaz, est en un matériau céramique.

4. Installation selon l'une des revendications précédentes, **caractérisée en ce que** la garniture de protection contre l'usure est réalisée à l'aide de tuiles ou carreaux de garniture.

5. Installation selon l'une des revendications précédentes, **caractérisée en ce que** la garniture de protection contre l'usure est formée au moins sur des secteurs de paroi intérieure sur lesquels se fait l'impact du flux de gaz.

6. Installation selon l'une des revendications précédentes, **caractérisée en ce que** la garniture de protection contre l'usure comprend des secteurs de garniture dans un carter de sortie (9) en aval, dans le dispositif d'évacuation (100) du dispositif de séchage (3).

7. Installation selon l'une des revendications précédentes, **caractérisée en ce que** la garniture de protection contre l'usure comprend d'autres secteurs de garniture dans un ou plusieurs séparateurs à cyclone (13a, 13b, 13c), qui sont placés en aval dans le dispositif d'évacuation (100) du dispositif de séchage (3).

8. Installation selon l'une des revendications précédentes, **caractérisée en ce que** dans un canal d'amenée (12), par l'intermédiaire duquel le flux de gaz avec les constituants susceptibles d'être en suspension dans l'air est amené aux plusieurs séparateurs à cyclone (13a, 13b, 13c), sont réalisés un ou plusieurs éléments de commande mobiles (70, 71) à l'aide desquels il est possible de régler une répartition du flux de gaz vers lesdits plusieurs séparateurs à cyclone (13a, 13b, 13c).

9. Installation selon la revendication 7 ou la revendication 8, **caractérisée en ce que** sur ledit un ou lesdits plusieurs séparateurs à cyclone (13a, 13b, 13c) est formé respectivement un dispositif de mesure de pression différentielle relevant une pression différentielle entre une zone supérieure et une zone inférieure.

10. Installation selon l'une des revendications précédentes, **caractérisée par** un dispositif de production de flux de gaz (6) comportant un dispositif de chauffage pour échauffer le flux de gaz, et un dispositif d'inertisation (7), qui est configuré pour introduire de la vapeur d'eau dans le flux de gaz par l'intermédiaire d'un système d'injecteur de pulvérisation, en réduisant ainsi la teneur en oxygène du flux de gaz.

11. Installation selon la revendication 10, **caractérisée en ce qu'**en amont du système d'injecteur est placé un dispositif de traitement de l'eau permettant de décalcifier l'eau devant être pulvérisée par injection pour former de la vapeur d'eau.

12. Installation selon l'une des revendications précédentes, **caractérisée en ce que** le dispositif de séchage (3) et le dispositif d'évacuation (100) présentent, au moins par secteurs, une isolation thermique.
